# EUROPEAN PATENT APPLICATION

(11) **EP 4 730 506 A1**
(43) Date of publication of application: **22.04.2026**
(21) Application number: 25201718.1
(22) Date of filing: 11.09.2025
(51) Int. Cl.: H01M 50/204, H01M 50/291

(54) **ENERGY STORAGE SYSTEM**

(30) Priority: 11.10.2024 KR 20240138332
(71) Applicant: SAMSUNG SDI CO., LTD., Yongin-si, Gyeonggi-do 17084 (KR)
(72) Inventor: KANG, Sung Koo, 16678 Suwon-si (KR)
(74) Representative: Marks & Clerk LLP

(57) **Abstract**

An energy storage system includes a rack frame, a rack tray which is obliquely installed in the rack frame and on which a battery module is seated, and a position fixer configured to support the battery module such that a position of the battery module is fixed.

## Description

### BACKGROUND

### 1. Field

Aspects of embodiments of the present disclosure relate to an energy storage system.

### 2. Description of the Related Art

Generally, an energy storage system (ESS) is a device capable of storing surplus electricity or electricity produced using renewable energy. An ESS may be constructed by installing a plurality of battery modules in racks and accommodating the plurality of racks in a container. A battery module may be constructed by assembling a plurality of secondary batteries, which are electrically connected to each other, in various structures.

Due to the nature of an ESS including a plurality of battery modules, if a fire occurs in one battery module, the fire may spread to the surroundings and burn adjacent battery modules or all adjacent battery modules.

The above-described information disclosed in the technology that forms the background of the present disclosure is provided to improve understanding of the background of the present disclosure, and thus may include information that does not constitute the related art.

### SUMMARY

According to an aspect of embodiments of the present disclosure, an energy storage system capable of preventing or substantially preventing heat transfer to an adjacent battery module if an event occurs in a battery module is provided.

The above and other aspects and features of the present disclosure will be described in or will be apparent from the following description of some embodiments of the present disclosure.

According to one or more embodiments of the present invention, an energy storage system includes a rack frame, a rack tray which is obliquely installed in the rack frame and on which a battery module is seated, and a position fixer configured to support the battery module such that a position of the battery module is fixed.

The rack tray may include a plurality of rack trays spaced apart from each other in a first direction, and rack trays of the plurality of rack trays may be obliquely arranged in a second direction intersecting the first direction.

The battery module may include a first portion and a second portion arranged to be lower than the first portion.

The battery module may be insertable into the rack frame by being moved in a direction opposite to the second direction.

The position fixer may include a first hook configured to be hooked and coupled to the second portion, and a first connector connecting the rack frame and the first hook and configured to be melted and ruptured by heat applied by the battery module.

The first connector may include an elastically deformable material.

If the first connector is ruptured, the battery module may move in the second direction and be separated from the rack frame.

The position fixer may further include an elastic portion arranged on the rack tray and configured to elastically support the first hook in a direction opposite to the first direction.

The elastic portion may include a plate portion extending from the rack tray, and an elastic body on the plate portion and configured to be compressed and deformed by contact with the first hooking member.

The position fixer may include a door rotatably coupled to the rack tray and configured to support the second portion, a second hook configured to be hooked and coupled to the door, and a second connector connecting the rack frame and the second hook and configured to be melted and ruptured by heat applied by the battery module.

The door may have a coupling hole to which an end portion of the second hook is fitted into and coupled.

The second connector may include an elastically deformable material.

If the second connector is ruptured, the battery module may move in the second direction and be separated from the rack frame.

The battery module may further include a module terminal located at the first portion, and the rack frame may include a connector which is arranged to face the module terminal and to which the module terminal is connected.

The connector may protrude from the rack frame and extend in the second direction, and the module terminal may protrude from the first portion and extend in a direction opposite to the second direction.

The connector may be disconnected from the module terminal if the battery module moves in the second direction.

At least some of the above and other features of the invention are set out in the claims.

### BRIEF DESCRIPTION OF THE DRAWINGS

The drawings included with this specification illustrate some embodiments of the present disclosure, and further describe aspects and features of the present disclosure together with the detailed description of the present disclosure. However, the present disclosure should not be construed as being limited to the drawings:
FIG. 1 is a schematic perspective view illustrating an energy storage system according to an embodiment of the present disclosure;
FIG. 2 is a schematic side cross-sectional view illustrating the energy storage system of FIG. 1;
FIG. 3 is a partial enlarged view of FIG. 2;
FIG. 4 is a schematic side cross-sectional view illustrating a state in which a battery module is separated from a rack frame of the energy storage system of FIG. 1;
FIG. 5 is a schematic side cross-sectional view illustrating an energy storage system according to another embodiment of the present disclosure;
FIG. 6 is a partial enlarged view of FIG. 5;
FIG. 7 is a schematic side cross-sectional view illustrating a state in which a battery module is separated from a rack frame of the energy storage system of FIG. 5;
FIG. 8 is a schematic perspective view illustrating an energy storage system according to another embodiment of the present disclosure;
FIG. 9 is a schematic front view illustrating the energy storage system of FIG. 8;
FIG. 10 is a schematic side cross-sectional view illustrating the energy storage system of FIG. 8;
FIG. 11 is a partial enlarged view of FIG. 10;
FIG. 12 is a schematic side cross-sectional view illustrating a state in which a battery module is separated from a rack frame of the energy storage system of FIG. 8;
FIG. 13 is a schematic side cross-sectional view illustrating an energy storage system according to another embodiment of the present disclosure;
FIG. 14 is a partial enlarged view of FIG. 13; and
FIG. 15 is a schematic side cross-sectional view illustrating a state in which a battery module is separated from a rack frame of the energy storage system of FIG. 13.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

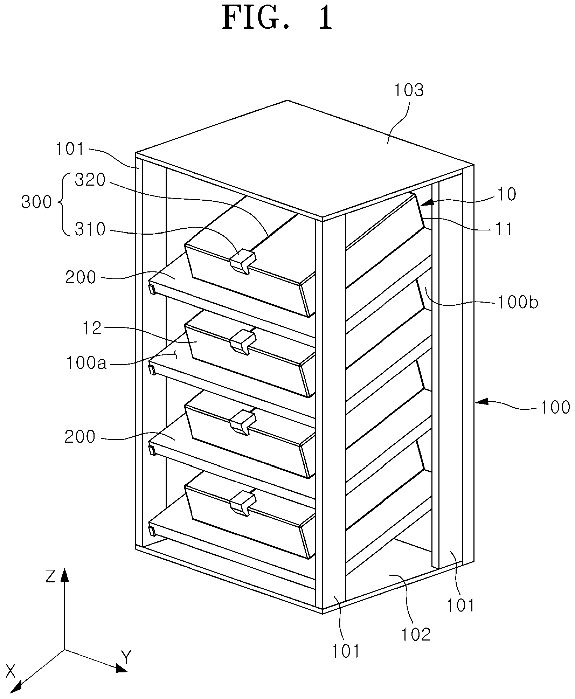

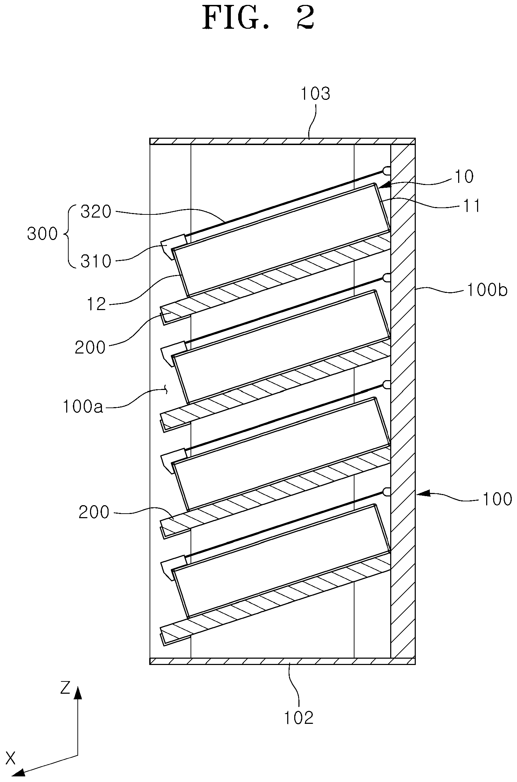

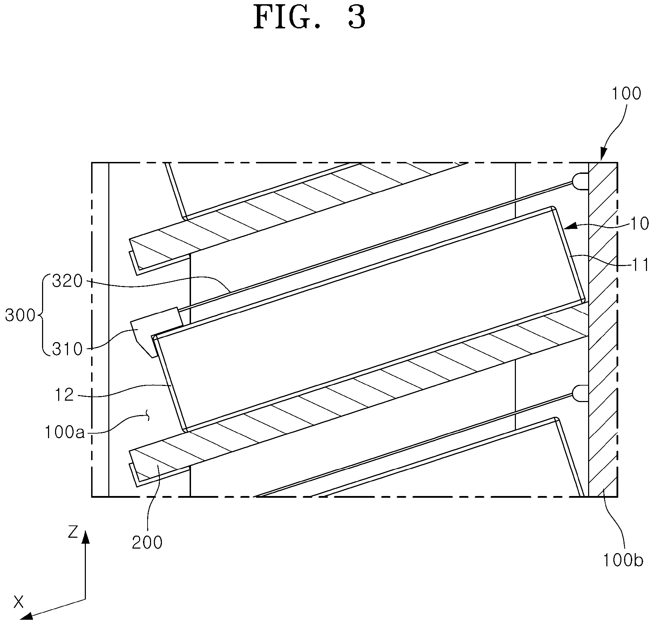

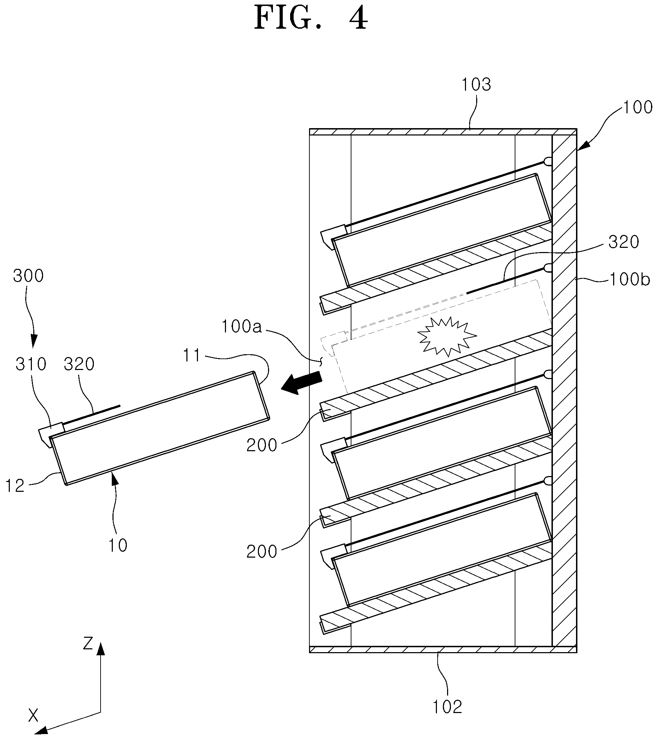

FIG. 1 is a schematic perspective view illustrating an energy storage system according to an embodiment of the present disclosure. FIG. 2 is a schematic side cross-sectional view illustrating the energy storage system of FIG. 1. FIG. 3 is a partial enlarged view of FIG. 2. FIG. 4 is a schematic side cross-sectional view illustrating a state in which a battery module is separated from a rack frame of the energy storage system of FIG. 1.

Referring to FIGS. 1 to 4, an energy storage system according to an embodiment of the present disclosure may include a rack frame 100, a rack tray 200, and a position fixing portion, or position fixer, 300.

The rack frame 100 may have a space in which a battery module 10 to be described below may be accommodated. The rack frame 100 may have a shape of a box or frame with an empty interior.

The rack frame 100 may be disposed indoors in a building and may be disposed inside a container, a cabinet, etc. The rack frame 100 may include a high-strength material, such as steel, to be prevented or substantially prevented from being damaged due to a load applied by the battery module 10.

The rack frame 100 may include a plurality of unit frames 101. The plurality of unit frames 101 may each be positioned at one of corners of the rack frame 100 and may be disposed in a first direction. The first direction may be a Z-axis direction in FIG. 1, that is, a height direction of the rack frame 100.

The plurality of unit frames 101 may have a shape of a column extending upward (see FIG. 1) from each corner of the rack frame 100.

The rack frame 100 according to an embodiment may include a bottom portion 102 and a ceiling portion 103.

The bottom portion 102 may form a lower exterior (see FIG. 1) of the rack frame 100. In an embodiment, the bottom portion 102 may have a shape of a quadrangular plate. Each unit frame 101 may be disposed at a corner of the bottom portion 102.

The unit frames 101 may be integrally fixed to the bottom portion 102 through welding or the like or may be detachably assembled to the bottom portion 102 through bolting, fitting, etc.

The ceiling portion 103 may form an upper exterior (see FIG. 1) of the rack frame 100. In an embodiment, the ceiling portion 103 may have a shape of a quadrangular plate. A or each corner of the ceiling portion 103 may be seated on one of or a corresponding one of the unit frames 101.

The ceiling portion 103 may be integrally fixed to the unit frames 101 through welding or the like or may be detachably assembled to the unit frames 101 through bolting, fitting, etc.

The bottom portion 102 and the ceiling portion 103 may be disposed to face each other in the height direction of the rack frame 100. The ceiling portion 103 may be disposed to be spaced apart from the bottom portion 102 in the first direction.

In an embodiment, the bottom portion 102 and the ceiling portion 103 may be disposed to be parallel to each other. In an embodiment, an area of the bottom portion 102 and the ceiling portion 103 may be equal to each other.

However, in addition to a rectangular parallelepiped shape shown in FIG. 1, a shape of the rack frame 100 may have any of various shapes, such as a polyhedral shape and a cylindrical shape. The number of unit frames may be adjusted accordingly. It is also to be appreciated that the present invention is not limited to an embodiment with four unit frames, one in each corner - more or fewer unit frames may be provided and/or they may be spaced from corners or edges of the bottom portion and/or the ceiling portion.

The rack frame 100 may include a first surface 100a and a second surface 100b positioned at a side opposite to the first surface 100a. The first surface 100a and the second surface 100b may be disposed to be parallel and opposite to each other. The first surface 100a of the rack frame 100 may be formed to be open and may allow an internal space and an external space of the rack frame 100 to communicate with each other.

The rack tray 200 may be installed inside the rack frame 100. The rack tray 200 may partition the internal space of the rack frame 100. The rack tray 200 may be formed to generally have a shape of a plate.

In an embodiment, the rack tray 200 may be integrally provided to the rack frame 100. The rack tray 200 may be fixed to the unit frames 101 through welding or the like or may be detachably assembled to the unit frames 101 through bolting, fitting, etc.

A plurality of rack trays 200 may be provided. The plurality of rack trays 200 may be disposed to be spaced apart from each other in the height direction of the rack frame 100 inside the rack frame 100, that is, in the first direction in FIG. 1. The rack tray 200 may be disposed between the bottom portion 102 and the ceiling portion 103 of the rack frame 100.

A number of rack trays 200 and an interval between adjacent rack trays 200 may be varied according to a height of the battery module 10 to be described below. The rack tray 200 may include a high-strength material, such as steel, to be prevented or substantially prevented from being damaged due to a load applied by the battery module 10.

The rack tray 200 may be obliquely installed in the rack frame 100. The plurality of rack trays 200 spaced apart from each other in the first direction may be obliquely disposed in a second direction.

The second direction may be a direction that is an X-axis direction with respect to FIG. 1, that is, a direction inclined downward at a certain angle (e.g., a set angle) toward the bottom portion 102 of the rack frame 100 in a direction from the second surface of the rack frame 100 toward the first surface. In addition, the second direction may be a direction of gravity.

The battery module 10 may store power through charging and discharging operations or supply the stored power to an external electronic device (not shown).

In an embodiment, the battery module 10 may include a module case generally having a shape of a box, a plurality of battery cells disposed inside the module case, and a cooling plate through which cooling water flows to cool the battery cells.

Each battery cell may be a pouch-type secondary battery, a prismatic secondary battery, or a cylindrical secondary battery, for example.

The battery module 10 may be disposed such that a longitudinal direction thereof is parallel to the second direction. In a state of being disposed to face the first surface 100a outside the rack frame 100, the battery module 10 may be moved in a direction opposite to the second direction to be inserted into the rack frame 100 through the first surface 100a.

Conversely, in a state of being inserted into the rack frame 100, the battery module 10 may be moved in the second direction to be detached to the outside of the rack frame 100 through the first surface 100a.

The battery module 10 may be mounted on the rack tray 200 inside the rack frame 100. A lower surface of the battery module 10 may be in contact with an upper surface of the rack tray 200.

A plurality of battery modules 10 may be provided. The plurality of battery modules 10 may be disposed to be spaced apart from each in the first direction in FIG. 1 inside the rack frame 100 and each mounted on a respective rack tray 200.

The plurality of battery modules 10 may each be obliquely seated in the second direction on a respective rack tray 200 obliquely installed in the second direction in the rack frame 100.

The battery module 10 may include a first portion 11 and a second portion 12 disposed at a lower level than the first portion 11. The first portion 11 may be positioned to be higher than the second portion 12 with respect to the bottom portion 102 of the rack frame 100.

The first portion 11 of the battery module 10 may be relatively closer to the second surface 100b of the rack frame 100 than the second portion 12 and may be disposed to face the second surface 100b.

The second portion 12 of the battery module 10 may be relatively closer to the first surface 100a of the rack frame 100 than the first portion 11 and may be positioned to face the first surface 100a.

The position fixing portion 300 may support the battery module 10 inside the rack frame 100. The position fixing portion 300 may fix a position of the battery module 10 by supporting the battery module 10 which may otherwise move in the second direction due to a dead load of the battery module 10 obliquely seated on the rack tray 200.

The position fixing portion 300 may fix the battery module 10 to the rack tray 200 and prevent or substantially prevent the battery module 10 from being separated from the rack frame 100 through the first surface 100a of the rack frame 100, for example due to such movement.

The position fixing portion 300 may include a first hooking member, or a first hook, 310 and a first connection member, or a first connector, 320.

The first hooking member 310 may come into contact with the second portion 12 of the battery module 10 and may be hooked and coupled to the second portion 12. The first hooking member 310 may be hooked and connected to an outer surface of the second portion 12 facing the second direction. The first hooking member 310 may include a hook with a hook shape.

The first connection member 320 may connect the rack frame 100 and the first hooking member 310. The first connection member 320 may be disposed in a direction parallel to the second direction. A first side of the first connection member 320 may be connected to the second surface 100b of the rack frame 100, and a second side thereof may be connected to the first hooking member 310.

The first connection member 320 may be disposed across the battery module 10 in a length direction thereof. The first connection member 320 may be positioned to face an upper surface of the battery module 10.

In an embodiment, the first connection member 320 may include an elastically deformable material. The first connection member 320 may be melted and ruptured by heat applied from the battery module 10. The first connection member 320 may also be ruptured by pressure applied by the battery module 10.

In an embodiment, the first connection member 320 may have a thin and long shape like a string or may have a shape of a plate with a certain length (e.g., a set length). In an embodiment, the first connection member 320 may include a material such as rubber, silicone, fiber, plastic, etc.

As the first connection member 320 is ruptured by heat or pressure applied by the battery module 10, the battery module 10 may move in the second direction to be separated from the rack frame 100 together with the first hooking member 310.

As the first connection member 320, which supports the battery module 10 obliquely seated on the rack tray 200 obliquely installed in the rack frame 100 in the second direction, loses a support force, a force with which the battery module 10 moves due to a dead load thereof may act in the second direction, and thus the battery module 10 seated on the rack tray 200 may be separated from the rack frame 100 through the first surface 100a of the rack frame 100, for example by falling out therefrom. Therefore, heat transfer that may cause a fire to spread to adjacent battery modules 10 may be prevented or substantially prevented.

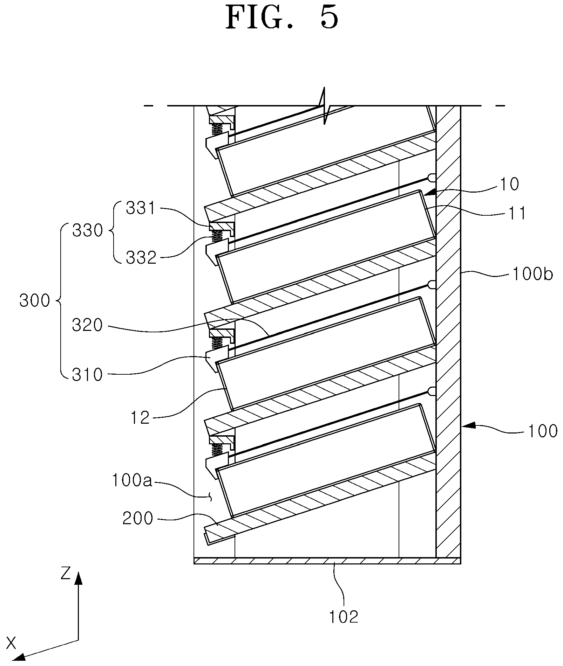

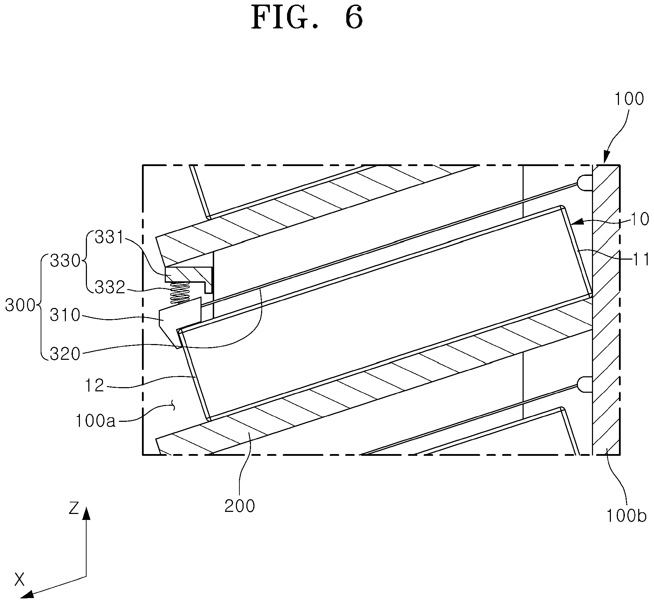

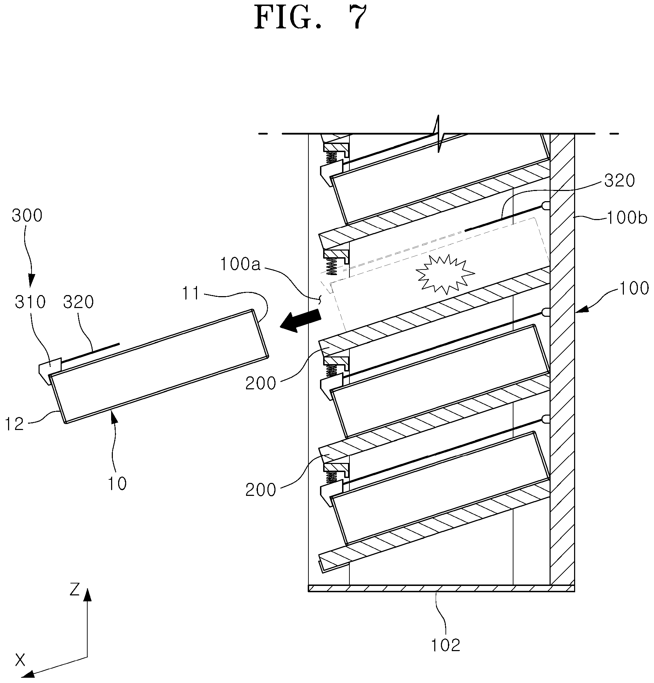

FIG. 5 is a schematic side cross-sectional view illustrating an energy storage system according to another embodiment of the present disclosure. FIG. 6 is a partial enlarged view of FIG. 6. FIG. 7 is a schematic side cross-sectional view illustrating a state in which a battery module is separated from a rack frame of the energy storage system of FIG. 5.

Referring to FIGS. 5 to 7, the energy storage system according to the present embodiment of the present disclosure may include a rack frame 100, a rack tray 200, and a position fixing portion 300.

The position fixing portion 300 according to the present embodiment may include a first hooking member 310, a first connection member 320, and an elastic portion 330.

In describing the energy storage system according to the present embodiment of the present disclosure, the elastic portion 330 that is not described in the energy storage system according to the previously described embodiment of the present disclosure will be described.

The description of the energy storage system according to the previously described embodiment of the present disclosure may be applied to the remaining components of the energy storage system according to the present embodiment of the present disclosure without any changes.

The position fixing portion 300 according to the present embodiment may further include the elastic portion 330.

The elastic portion 330 may be provided on the rack tray 200. The elastic portion 330 may be installed at a lower portion of the rack tray 200 adjacent to a first surface 100a of the rack frame 100. The elastic portion 330 may elastically support the first hooking member 310 in a direction opposite to the first direction.

In an embodiment, the elastic portion 330 may include a plate portion 331 and an elastic body 332.

The plate portion 331 may be provided at the lower portion of the rack tray 200 adjacent to the first surface 100a of the rack frame 100 and may extend horizontally from the rack tray 200 in a direction in which a second surface 100b of the rack frame 100 is positioned.

The elastic body 332 may be provided on the plate portion 331. The elastic body 332 may be coupled to a lower portion of the plate portion 331. The elastic body 332 may elastically support the first hooking member 310. The elastic body 332 may be compressed and deformed by coming into contact with the first hooking member 310.

The elastic body 332 may elastically support the first hooking member 310 in a direction opposite to the first direction between the plate portion 331 and the first hooking member 310. In an embodiment, the elastic body 332 may be a coil spring.

The elastic body 332 may be compressed and deformed by coming into contact with the first hooking member 310 when the battery module 10 is inserted into the rack frame 100 through the first surface 100a. The elastic body 332 may elastically support the first hooking member 310 in a direction opposite to the first direction to assist in a support force of the first connection member 320.

The elastic body 332 may provide an elastic force to the battery module 10, which may move in a second direction when the first connection member 320 is ruptured by heat or pressure applied by the battery module 10, in the direction opposite to the first direction, thereby facilitating the separation of the battery module 10 from the rack frame 100.

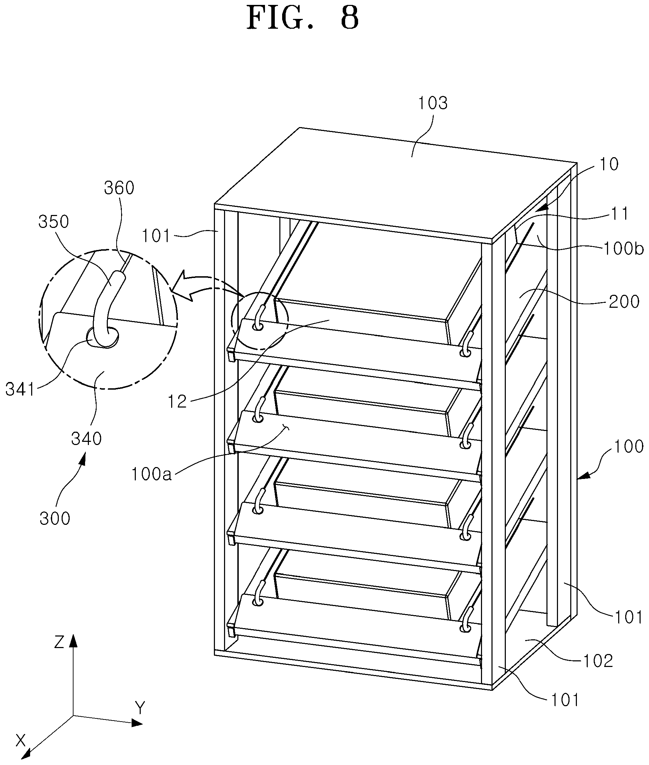

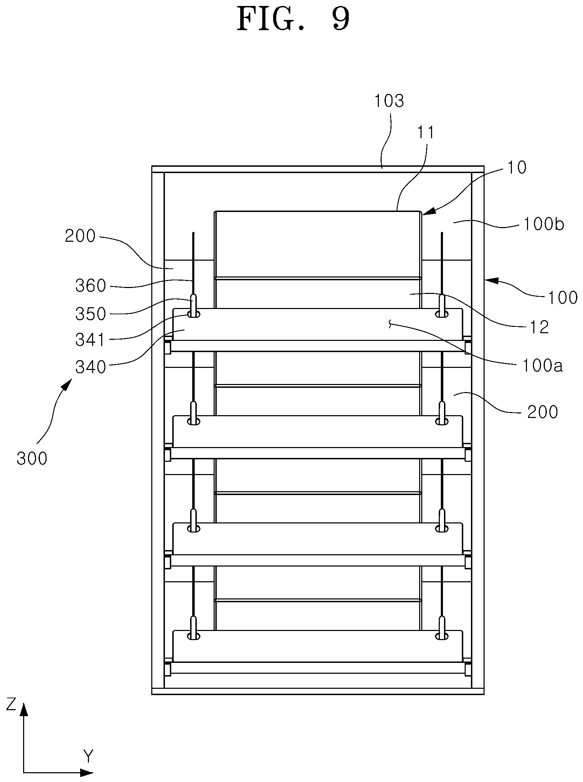

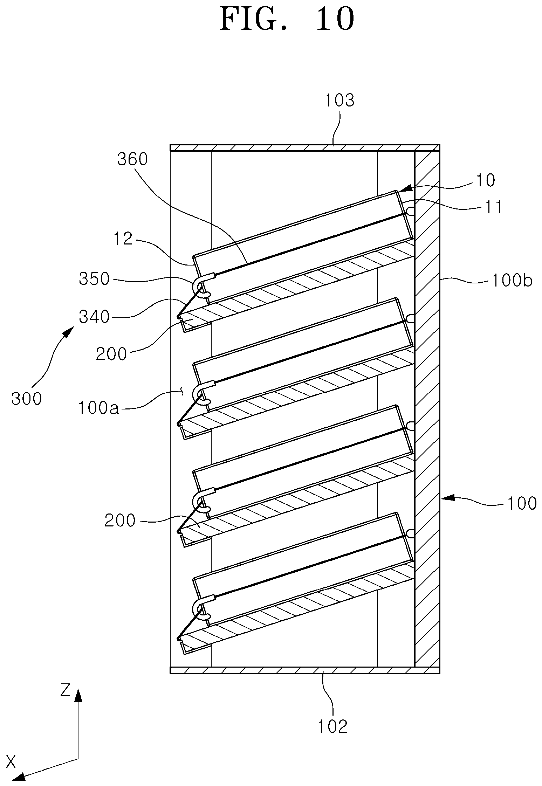

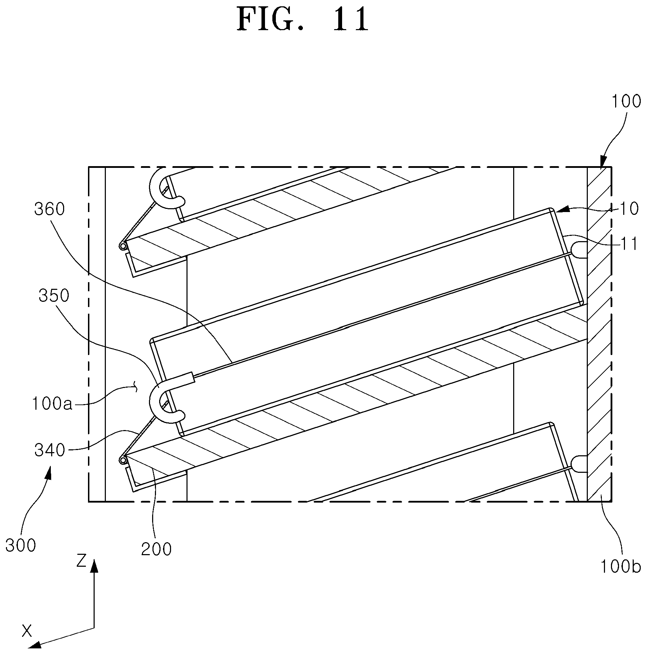

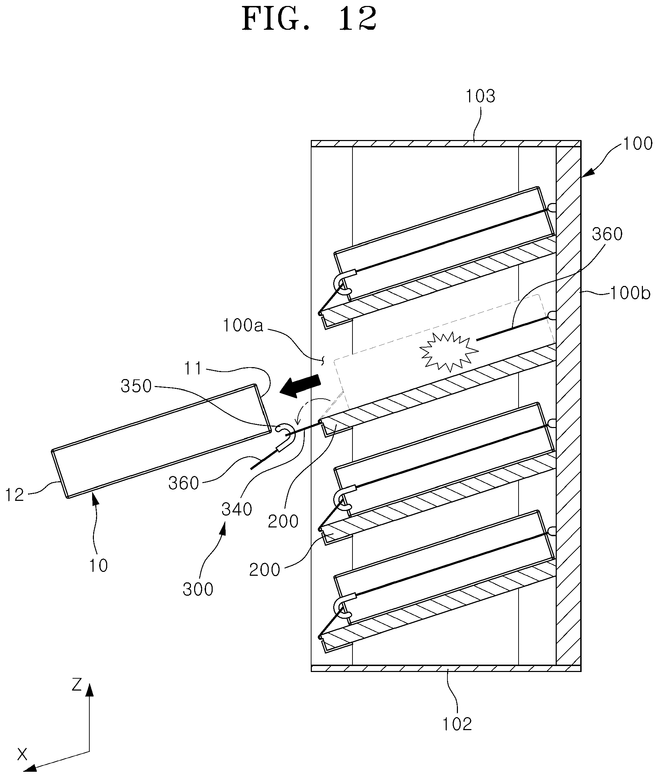

FIG. 8 is a schematic perspective view illustrating an energy storage system according to another embodiment of the present disclosure. FIG. 9 is a schematic front view illustrating the energy storage system of FIG. 8. FIG. 10 is a schematic side cross-sectional view illustrating the energy storage system of FIG. 8. FIG. 11 is a partial enlarged view of FIG. 10. FIG. 12 is a schematic side cross-sectional view illustrating a state in which a battery module is separated from a rack frame of the energy storage system of FIG. 8.

Referring to FIGS. 8 to 12, the energy storage system according to the present embodiment of the present disclosure may include a rack frame 100, a rack tray 200, and a position fixing portion 300.

In describing the energy storage system according to the present embodiment of the present disclosure, another embodiment of the position fixing portion that is not described in the energy storage system according to the previously described embodiments of the present disclosure will be described.

The description of the energy storage system according to the previously described embodiments of the present disclosure may be applied to the remaining components of the energy storage system according to the present embodiment of the present disclosure without any changes.

The position fixing portion 300 may include a door portion, or door, 340, a second hooking member, or second hook, 350, and a second connection member, or second connector, 360.

The door portion 340 may be rotatably coupled to the rack tray 200. The door portion 340 may be adjacent to a first surface 100a of the rack frame 100 and may be rotatably connected by a hinge at an edge of the rack tray 200 facing the first surface 100a.

The door portion 340 may be disposed in a third direction intersecting the first and the second directions. The third direction may be parallel to a **Y-axis** in FIG. 8 and may be a width direction of the battery module 10. The door portion 340 may be in contact with a second portion 12 of the battery module 10 to support the second portion 12.

The second hooking member 350 may be hooked and connected to the door portion 340. In an embodiment, the second hooking member 350 may include a hook with a hook shape.

The door portion 340 may have a coupling hole 341. The coupling hole 341 may be formed to pass through the door portion 340 in a thickness direction thereof. In an embodiment, a plurality of coupling holes 341 may be formed to be spaced apart from each other in the third direction. An end portion of the second hooking member 350 may be fitted into and coupled to the coupling hole 341.

The second connection member 360 may connect the rack frame 100 and the second hooking member 350. The second connection member 360 may be disposed in a direction parallel to the second direction. A first side of the second connection member 360 may be connected to a second surface 100b of the rack frame 100, and a second side thereof may be connected to the second hooking member 350.

The second connection member 360 may be disposed across the battery module 10 in a length direction thereof. The second connection member 360 may be positioned to face a side surface of the battery module 10.

In an embodiment, the second connection member 360 may include an elastically deformable material. The second connection member 360 may be melted and ruptured by heat applied by the battery module 10. The second connection member 360 may also be ruptured by pressure applied by the battery module 10.

In an embodiment, the second connection member 360 may have a thin and long shape like a string or may have a shape of a plate with a certain length (e.g., a set length). In an embodiment, the second connection member 360 may include a material such as rubber, silicone, fiber, plastic, etc.

As the second connection member 360 is ruptured by heat or pressure applied by the battery module 10, the battery module 10 moves in the second direction, and, as the battery module 10 moves, the door portion 340 rotates, thus opening in the second direction due to being pressed by the battery module 10 such that the battery module 10 may be separated from the rack frame 100.

As the second connection member 360, which supports the battery module 10 obliquely seated on the rack tray 200 obliquely installed in the rack frame 100 in the second direction, loses a support force, a force with which the battery module 10 moves due to a dead load thereof may act in the second direction, and thus the battery module 10 seated on the rack tray 200 may be separated from the rack frame 100 through the first surface 100a of the rack frame 100. Therefore, heat transfer that may cause a fire to spread to adjacent battery modules 10 may be prevented or substantially prevented.

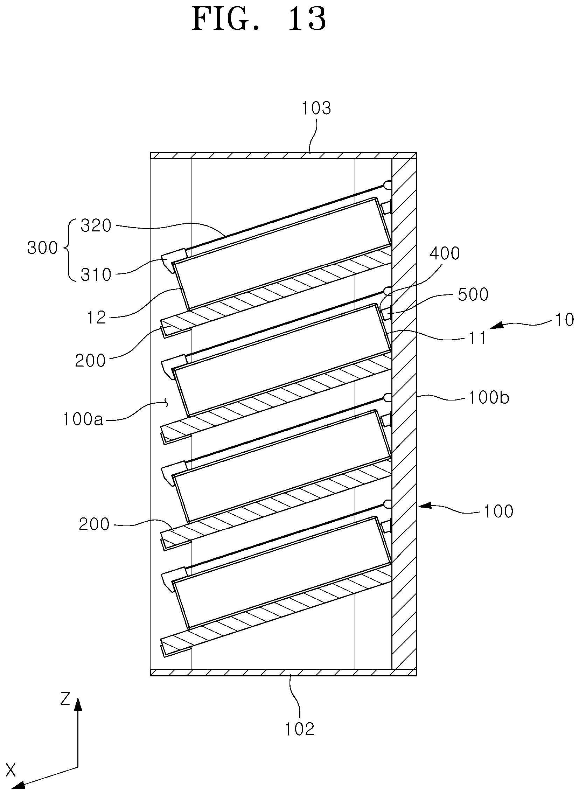

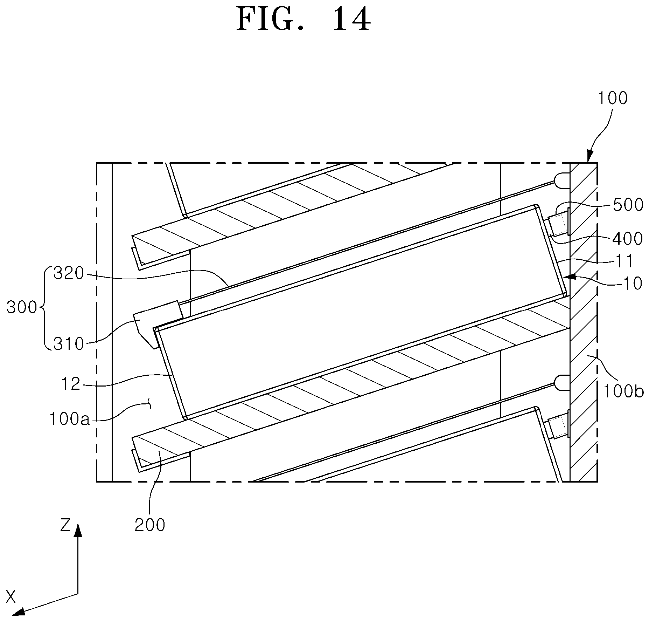

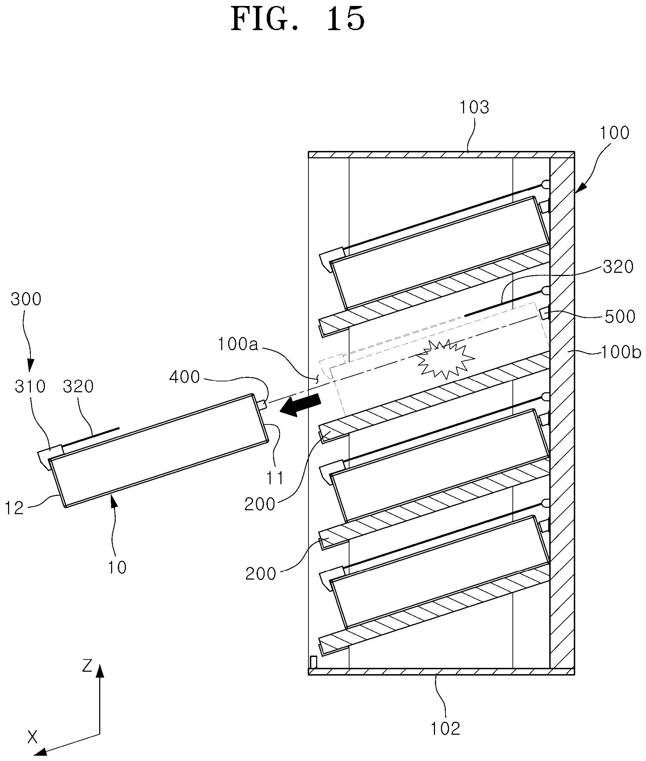

FIG. 13 is a schematic side cross-sectional view illustrating an energy storage system according to another embodiment of the present disclosure. FIG. 14 is a partial enlarged view of FIG. 13. FIG. 15 is a schematic side cross-sectional view illustrating a state in which a battery module is separated from a rack frame of the energy storage system of FIG. 13.

Referring to FIGS. 13 to 15, the energy storage system according to the present embodiment of the present disclosure may include a rack frame 100, a rack tray 200, a position fixing portion 300, a module terminal 400, and a connector 500.

In describing the energy storage system according to the present embodiment of the present disclosure, the module terminal 400 and the connector 500 that are not described in the energy storage system according to the previously described embodiments of the present disclosure will be described.

The description of the energy storage system according to the previously described embodiments of the present disclosure may be applied to the remaining components of the energy storage system according to the present embodiment of the present disclosure without any changes.

The module terminal 400 may be provided in a battery module 10. The module terminal 400 may be provided at a first portion 11. Through the module terminal 400, the battery module 10 may be electrically connected to another battery module 10 or an external device.

The module terminal 400 may protrude from the first portion 11 of the battery module 10. The module terminal 400 may extend in a direction opposite to the second direction.

The connector 500 may be provided on the rack frame 100. The connector 500 may be installed on a second surface 100b of the rack frame 100. The connector 500 may be positioned to face the module terminal 400. The connector 500 may be connected to the module terminal 400.

The connector 500 may be configured to electrically connect the module terminals 400 provided in a plurality of battery modules 10.

The connector 500 may protrude from the rack frame 100. The connector 500 may protrude from the second surface 100b of the rack frame 100 and extend in the second direction.

The connector 500 may be disconnected from the module terminal 400 if the first connection member 320 is ruptured by heat or pressure applied by the battery module 10, and the battery module 10 moves in the second direction (or if the second connection member 360 is ruptured if this embodiment is combined with the other previous embodiment).

In an embodiment, the connector 500 and the module terminal 400 extend in a direction parallel to the second direction, and if the battery module 10 is separated from the rack frame 100, the module terminal 400 may automatically be separated from the connector 500.

According to one or more embodiments of the present disclosure, a position fixing portion, which supports a battery module seated (e.g., obliquely seated) on a rack tray obliquely installed in a rack frame to fix a position of the battery module, can be ruptured by heat or pressure applied by the battery module if an event of the battery module occurs.

Thus, a position fixing portion supporting the battery module can lose a support force, and thus the battery module in which the event has occurred can be separated from the rack frame to the outside due to a dead load thereof. Therefore, heat transfer that may cause a fire to spread to adjacent battery modules can be prevented or substantially prevented.

However, aspects and effects obtainable through the present disclosure are not limited to the above aspects and effects, and other technical aspects and effects that are not mentioned will be clearly understood by those skilled in the art from the following description of the present disclosure.

While the present disclosure has been described with reference to some example embodiments shown in the drawings, these embodiments are merely illustrative and it is to be understood that various modifications and equivalent other embodiments can be derived by those skilled in the art on the basis of the embodiments. Therefore, the technical scope of the present disclosure should be defined by the claims.

## Claims

1. An energy storage system comprising:
a rack frame;
a rack tray which is obliquely installed in the rack frame and on which a battery module is seated; and
a position fixer configured to support the battery module such that a position of the battery module is fixed.

2. The energy storage system as claimed in claim 1, wherein the rack tray comprises a plurality of rack trays spaced apart from each other in a first direction, and
rack trays of the plurality of rack trays are obliquely disposed in a second direction intersecting the first direction.

3. The energy storage system as claimed in claim 2, wherein the battery module is insertable into the rack frame while moving in a direction opposite to the second direction.

4. The energy storage system as claimed in claim 2 or claim 3, wherein the battery module comprises:
a first portion; and
a second portion arranged to be lower than the first portion.

5. The energy storage system as claimed in claim 4, wherein the position fixer comprises:
a first hook configured to be hooked and coupled to the second portion; and
a first connector connecting the rack frame and the first hook and configured to be melted and ruptured by heat applied by the battery module.

6. The energy storage system as claimed in claim 5, wherein the first connector comprises an elastically deformable material.

7. The energy storage system as claimed in claim 5 or claim 6, configured such that if the first connector is ruptured, the battery module is configured to move in the second direction and is thus configured to be separated from the rack frame.

8. The energy storage system as claimed in any one of claims 5 to 7, wherein the position fixer further comprises an elastic portion on the rack tray and is configured to elastically support the first hook in a direction opposite to the first direction.

9. The energy storage system as claimed in claim 8, wherein the elastic portion comprises:
a plate portion configured to extend from the rack tray; and
an elastic body on the plate portion and configured to be compressed and deformed by coming into contact with the first hook.

10. The energy storage system as claimed in any one of claims 4 to 9, wherein the position fixer comprises:
a door rotatably coupled to the rack tray and configured to support the second portion;
a second hook configured to be hooked and coupled to the door; and
a second connector connecting the rack frame and the second hook and configured to be melted and ruptured by heat applied by the battery module.

11. The energy storage system as claimed in claim 10, wherein the door has a coupling hole to which an end portion of the second hook is fitted into and coupled.

12. The energy storage system as claimed in claim 10 or claim 11, wherein the second connector comprises the elastically deformable material.

13. The energy storage system as claimed in any one of claims 10 to 12, configured such that if the second connection member is ruptured, the battery module is configured to move in the second direction and is thus configured to be separated from the rack frame.

14. The energy storage system as claimed in any one of claims 4 to 13, wherein the battery module further comprises a module terminal located at the first portion, and
the rack frame comprises a connector arranged to face the module terminal and to which the module terminal is connected.

15. The energy storage system as claimed in claim 14, wherein the connector protrudes from the rack frame and extends in the second direction, and
the module terminal protrudes from the first portion and extends in a direction opposite to the second direction.
